# EUROPÄISCHE PATENTANMELDUNG

(11) **EP 1 906 108 A2**
(43) Veröffentlichungstag der Anmeldung: **02.04.2008**
(21) Anmeldenummer: 07113899.4
(22) Anmeldetag: 07.08.2007
(51) Int. Cl.: F24H 1/00, B60H 1/00

(54) **Wasserstoffheizung**

(30) Priorität: 28.09.2006 DE 102006046256
(71) Anmelder: J. Eberspächer GmbH & Co. KG, 73730 Esslingen (DE)
(72) Erfinder: KAUPERT, Andreas, 73730, Esslingen (DE); EBERSPACH, Günter, 72649, Wolfschlugen (DE)
(74) Vertreter: Bongen, Renaud & Partner

(57) **Zusammenfassung**

Die vorliegende Erfindung betrifft eine Wasserstoffheizung (1), umfassend einen Wasserstofftank (2) zum Speichern von Wasserstoff, einen an den Wasserstofftank (2) angeschlossenen Brenner (3) zum Erzeugen heißer Brennerabgase (16) durch Verbrennen von Wasserstoffgas (14) und einen Sauerstoff enthaltenden Oxidatorgas (15), eine Oxidatorzuführeinrichtung (4) zur Versorgung des Brenners (3) mit dem Oxidatorgas (15) und einen Wärmeübertrager (5) zur Übertragung von Wärme vom Brennerabgas (16) auf ein Heizmedium (21).

## Beschreibung

Die vorliegende Erfindung betrifft eine Wasserstoffheizung, also eine Heizeinrichtung, die mit Wasserstoff als Brennstoff betrieben werden kann.

Die Umsetzung von Wasserstoff, also die Umwandlung der im Wasserstoff chemisch gebundenen Energie in elektrische Energie und/oder in Wärme lässt sich mit extrem niedrigen Schadstoffemissionen realisieren, wodurch Wasserstoff als Energieträger zunehmend an Interesse gewinnt.

Die vorliegende Erfindung beschäftigt sich mit dem Problem, für die Nutzung von Wasserstoff als Energieträger einen vorteilhaften Weg aufzuzeigen, der sich insbesondere durch niedrige Schadstoffemissionen auszeichnet. Angestrebt sind Abgase, die quasi frei von Kohlendioxid sind, sehr wenig Stickoxide enthalten und weitgehend frei von Kohlenwasserstoffen sind.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine Wasserstoffheizung bereitzustellen, bei der in einem Brenner Wasserstoffgas, das von einem Wasserstofftank zugeführt wird, mit Oxidatorgas, das von einer Oxidatorzuführeinrichtung zugeführt wird, zu verbrennen, um dadurch heiße Brennerabgase zu erzeugen, deren Wärme in einem dem Brenner nachgeordneten Wärmeübertrager auf ein Heizmedium übertragen wird. Das Heizmedium kann dann grundsätzlich auf beliebige Weise genutzt werden, um einen Wärmebedarf zu decken. Die Umsetzung von reinem Wasserstoff mit reinem Sauerstoff ist quasi schadstofffrei, so dass die Schadstoffemissionen der Wasserstoffheizung hauptsächlich von der Zusammensetzung des verwendeten Oxidatorgases abhängen und dementsprechend niedrig sein können. Beispielsweise wird als Oxidatorgas Umgebungsluft verwendet, die als Hauptkomponenten Sauerstoff und Stickstoff enthält. Durch Beherrschen der Verbrennungstemperatur im Brenner lassen sich extrem niedrige Emissionswerte für Stickoxide erzielen. Durch das verwendete Verbrennungsprinzip treten Emissionen von Kohlenmonoxiden, Kohlendioxiden und Kohlenwasserstoffen quasi nicht auf.

Die erfindungsgemäße Wasserstoffheizung kann bei einer Ausführungsform als Gebäudeheizung ausgestaltet sein, die zum Beheizen eines Gebäudes dient. Hierzu ist besagtes Gebäude mit einem Heizkreis ausgestattet, in dem das zuvor genannte Heizmedium zirkuliert. Dementsprechend ist der Wärmeübertrager der Wasserstoffheizung in den Heizkreis des Gebäudes eingebunden. Diese Ausführungsform schlägt somit die Verwendung der Wasserstoffheizung als Gebäudeheizung vor.

Bei einer anderen Ausführungsform kann die erfindungsgemäße Wasserstoffheizung als Standheizung oder als Zuheizer eines Kraftfahrzeugs ausgestaltet sein. Diese Ausführungsform schlägt somit die Verwendung der Wasserstoffheizung als Standheizung oder als Zuheizer in einem Kraftfahrzeug vor. Eine derartige Ausführungsform ist insbesondere dann von Vorteil, wenn das mit der Wasserstoffheizung ausgestattete Kraftfahrzeug eine mit Wasserstoff betriebene Antriebseinrichtung aufweist, die an einen im Fahrzeug angeordneten Wasserstofftank angeschlossen ist. Der Brenner der ebenfalls im Fahrzeug angeordneten Wasserstoffheizung ist dann ebenfalls an den zur Versorgung der Antriebseinrichtung vorgesehenen Wasserstofftank des Fahrzeugs angeschlossen. Fahrzeuge mit einer mit Wasserstoff betriebenen Antriebseinrichtung, z.B. in Form von Verbrennungsmotoren oder Brennstoffzellen, sind an sich bekannt. Durch die vorgeschlagene Integration der Wasserstoffheizung in ein derartiges Fahrzeug lässt sich die Lebenszeit der Antriebseinrichtung bzw. der Komfort des Fahrzeugs verbessern. Effiziente Antriebseinrichtungen erzeugen vergleichsweise wenig Abwärme, so dass die Antriebseinrichtung relativ lange braucht, bis sie ihre optimale Betriebstemperatur erreicht. Unterhalb ihrer optimalen Betriebstemperatur ist die jeweilige Antriebseinrichtung, insbesondere ein Verbrennungsmotor, erhöhtem Verschleiß ausgesetzt; des weiteren neigt sie zu erhöhten Schadstoffemissionswerten. Durch den ebenfalls mit Wasserstoff betriebenen Zuheizer kann die jeweilige Antriebseinrichtung rascher auf ihre optimale Betriebstemperatur gebracht werden. Desweiteren kann eine Beheizung eines Fahrzeuginnenraums nur dann zufriedenstellend durchgeführt werden, wenn die Antriebseinrichtung hinreichend überschüssige Wärme erzeugt. Durch den Zuheizer kann die für die Beheizung des Fahrzeuginnenraums benötigte Wärme effizient bereitgestellt werden. Durch die mit Wasserstoff betriebene Standheizung kann auch bei ausgeschalteter Antriebseinrichtung hinreichend Wärme bereitgestellt werden, um den Fahrzeuginnenraum direkt zu Beheizen und/oder um die Antriebseinrichtung vorzuwärmen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,

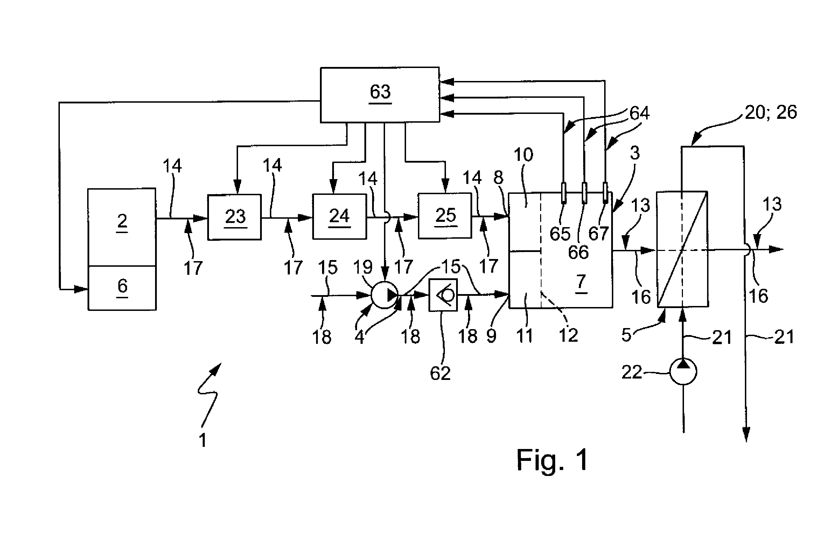

- Fig. 1 bis 3: jeweils eine stark vereinfachte, schaltplanartige Prinzipskizze einer Wasserstoffheizung bei unterschiedlichen Ausführungsformen.

Entsprechend den Fig. 1 bis 3 umfasst eine erfindungsgemäße Wasserstoffheizung 1 einen Wasserstofftank 2, einen Brenner 3, eine Oxidatorzuführeinrichtung 4 und einen Wärmeübertrager 5. Der Wasserstofftank 2 dient zum Speichern von Wasserstoff. Dabei kann der Wasserstofftank 2 als Druckbehälter ausgestaltet sein, in dem der Wasserstoff z.B. bei 700 bar in komprimierter Form bevorratet wird. Alternativ kann der Wasserstofftank 2 als thermisch isolierter Behälter ausgestaltet sein, in dem der Wasserstoff in flüssiger Form bei ca. - 250°C bevorratet wird. Es ist klar, dass grundsätzlich auch ein Wasserstofftank denkbar ist, der als thermisch isolierter Druckbehälter für komprimierten und gekühlten, insbesondere flüssigen, Wasserstoff ausgestaltet ist.

Der Wasserstofftank 2 kann mit einer Einrichtung 6 ausgestattet sein, mit deren Hilfe eine Verdampfung des im Wasserstofftank 2 in flüssiger Form gespeicherten Wasserstoffs realisierbar ist. Zusätzlich oder alternativ kann auch eine Kühleinrichtung vorgesehen sein, um die niedrigen Temperaturen zur Bevorratung des flüssigen Wasserstoffs gewährleisten zu können.

Der Brenner 3 enthält einen Brennraum 7 und weist einen ersten Eingang 8 sowie einen zweiten Eingang 9 auf. Der erste Eingang 8 kommuniziert mit einem ersten Verteilerpfad 10, während der zweite Eingang 9 mit einem zweiten Verteilerpfad 11 kommuniziert. Der Brenner 3 ist über den ersten Eingang 8 an den Wasserstofftank 2 angeschlossen, und die Oxidatorzuführeinrichtung 4 ist an den zweiten Eingang 9 angeschlossen. Wasserstoffgas gelangt somit in den ersten Verteilerpfad 10, während ein Oxidatorgas in den zweiten Verteilerpfad 11 gelangt. Die beiden Verteilerpfade 10, 11 sind zweckmäßig so ausgestaltet, dass aus einer Wandstruktur 12, die den Brennraum 7 eingangsseitig begrenzt, das Wasserstoffgas und das Oxidatorgas jeweils durch eine Vielzahl von Öffnungen separat in den Brennraum 7 einströmen. Hierzu sind die dem Wasserstoffgas zugeordneten Öffnungen und die dem Oxidatorgas zugeordneten Öffnungen zweckmäßig innerhalb der Wandstruktur 12 regelmäßig oder gleichmäßig verteilt angeordnet.

Im Brennraum 7 findet im Betrieb des Brenners 3 eine Verbrennungsreaktion statt, bei welcher das Wasserstoffgas mit dem Oxidatorgas verbrennt, wobei heiße Brennerabgase generiert werden. Eine Abgasleitung 13 führt das Brennerabgas vom Brenner 3 weg. In den Fig. 1 bis 3 ist das Wasserstoffgas mit 14 bezeichnet, das Oxidatorgas ist mit 15 bezeichnet und das Brennerabgas ist mit 16 bezeichnet. Das Wasserstoffgas 14 wird dem Brenner 3 über eine Wasserstoffleitung 17 zugeführt, die den Wasserstofftank 2 mit dem ersten Eingang 8 verbindet.

Die Oxidatorzuführeinrichtung 4 umfasst eine Oxidatorleitung 18, die an den zweiten Eingang 9 angeschlossen ist und in der eine Fördereinrichtung 19 angeordnet ist. Die Fördereinrichtung 19, z.B. ein Gebläse, eine Pumpe, ein Kompressor oder eine Turbine, transportiert Oxidatorgas zum zweiten Eingang 9. Das Oxidatorgas 15 enthält Sauerstoff. Bevorzugt wird als Oxidatorgas 15 Luft verwendet. Die Oxidatorleitung 18 enthält zweckmäßig stromab der Fördereinrichtung ein Sperrventil 62, z.B. ein Rückschlagsperrventil, als Rückströmsicherung.

Der Wärmeübertrager 5 ist einerseits in die Abgasleitung 13 und andererseits in einen Heizpfad 20 eingebunden. Im Heizpfad 20 zirkuliert ein Heizmedium 21. Der Wärmeübertrager 5 ist so ausgestaltet, dass er im Betrieb der Wasserstoffheizung 1 Wärme vom Brennerabgas 16 auf das Heizmedium 21 überträgt, ohne dass es dabei zu einem Fluidaustausch kommt. Im Heizpfad 20 ist zweckmäßig ebenfalls eine Fördereinrichtung 22 angeordnet, z.B. ein Gebläse oder eine Pumpe.

Die Wasserstoffleitung 17 enthält stromab des Wasserstofftanks 2 beispielsweise ein Sperrventil oder Überströmventil 23. Stromab dieses Ventils 23 kann ein Druckbegrenzer 24 in der Wasserstoffleitung 17 angeordnet sein. Ferner kann optional in der Wasserstoffleitung 17 stromab des Druckbegrenzers 24 eine Dosiereinheit 25 angeordnet sein. Die Dosiereinheit 25 ist so ausgestaltet, dass sie dem Brenner 3 die für die Erzielung der jeweils benötigten Heizleistung erforderliche Wasserstoffmenge zumessen kann. Zum Betreiben der Wasserstoffheizung 1 ist zweckmäßig eine Steuerung 63 vorgesehen, die über Steuerleitungen z.B. mit der Verdampfungsvorrichtung, mit dem Sperr-/Überströmventil 23, mit dem Druckbegrenzer 24, mit der Dosiereinheit und mit der Fördereinrichtung 18 verbunden ist. Ferner kann die Steuerung 63 mit einer Sensorik 64 kommunizieren, die beispielsweise zumindest einen Temperatursensor 65, zumindest einen Flammensensor 66 und/oder zumindest einen Lambda-Sensor 67 aufweist.

Die in Fig. 1 gezeigte Ausführungsform der Wasserstoffheizung 1 kann beispielsweise als Gebäudeheizung ausgestaltet sein, mit deren Hilfe ein hier nicht gezeigtes Gebäude beheizt werden kann. Das Gebäude weist z.B. einen Heizkreis 26 auf. Dieser Heizkreis 26 ist hier durch den Heizpfad 20 gebildet. Dementsprechend zirkuliert im Heizkreis 26 das Heizmedium 21. Desweiteren ist der Wärmeübertrager 5 in diesen Heizkreis 26 eingebunden. Innerhalb des Gehäuses sind in den Heizkreis 26 in üblicher Weise Heizkörper und dergleichen eingebunden. Bei modernen Gebäuden mit Niedrigenergie- oder Autarkbauweise kann der Wärmeübertrager 5 in einen Zuluftpfad 26 des Gebäudes eingebunden sein, um die dem Gebäude zugeführte Zuluft, die dann das Heizmedium 21 bildet, aufzuwärmen.

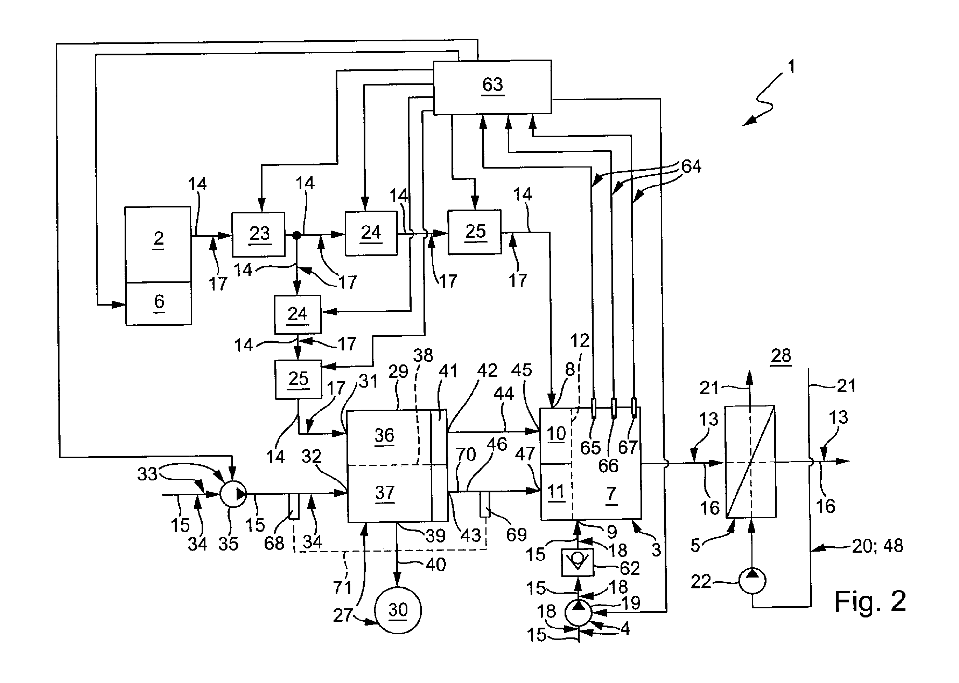

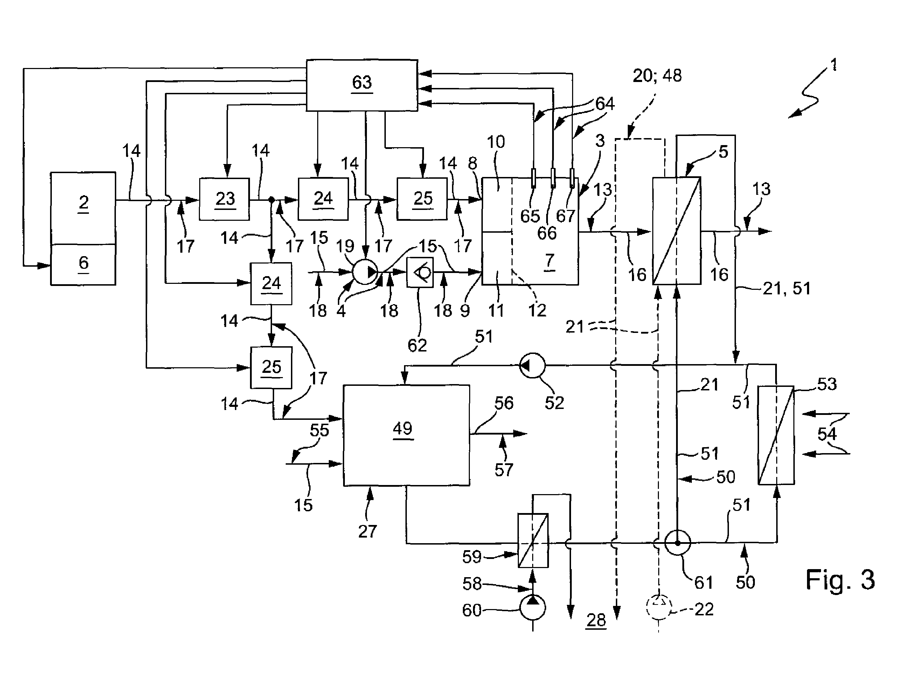

Bei den Ausführungsformen der Fig. 2 und 3 ist die Wasserstoffheizung 1 als Standheizung oder als Zuheizer eines hier nicht dargestellten Kraftfahrzeugs ausgestaltet. Mit Hilfe der als Zuheizer betriebenen Wasserstoffheizung 1 kann zusätzliche Wärme bereitgestellt werden, für den Fall, dass eine Antriebseinrichtung 27 des Fahrzeugs zu wenig Wärme produziert bzw. selbst beheizt werden muss. Als Standheizung kann die Wasserstoffheizung 1 verwendet werden, wenn bei ausgeschalteter Antriebseinrichtung 27 Wärme erzeugt werden soll. Mit Hilfe der von der Wasserstoffheizung 1 generierten Wärme kann beispielsweise die Antriebseinrichtung 27 auf eine gewünschte Arbeitstemperatur aufgeheizt werden. Zusätzlich oder alternativ kann mit Hilfe der Wasserstoffheizung 1 ein Fahrzeuginnenraum 28 beheizt werden.

Zweckmäßig besitzt das Fahrzeug eine Antriebseinrichtung 27, die mit Wasserstoff betrieben werden kann. Im Fahrzeug ist dann ein Wasserstofftank angeordnet, in dem der Wasserstoff zum Betreiben der Antriebseinrichtung 27 bevorratet ist. Wenn die Wasserstoffheizung 21 entsprechend bevorzugter Ausführungsformen in einem derartigen Kraftfahrzeug angeordnet ist, kann als Wasserstofftank zur Versorgung des Brenners 3 der ohnehin im Fahrzeug vorhandene Wasserstofftank verwendet werden, so dass dieser im folgenden ebenfalls mit 2 bezeichnet ist. Dementsprechend ist der Brenner 3 an den im Fahrzeug angeordneten Wasserstofftank 2 des Fahrzeugs angeschlossen.

Bei der in Fig. 2 gezeigten Ausführungsform weist die Antriebseinrichtung 27 eine Brennstoffzelle 29 sowie einen Elektromotor 30 auf. Die Brennstoffzelle 29 dient zum Generieren von elektrischem Strom aus einem wasserstoffhaltigen Anodengas und einen sauerstoffhaltigen Kathodengas. Als Anodengas wird das Wasserstoffgas 14 verwendet, so dass im folgenden auch das Anodengas mit 14 bezeichnet wird. Als Kathodengas wird zweckmäßig Luft verwendet, die auch als Oxidatorgas 15 dient, so dass im folgenden das Kathodengas ebenfalls mit 15 bezeichnet wird. Die Brennstoffzelle 29 weist einen Anodengaseingang 30 auf, an den ein Zweig der Wasserstoffleitung 17 angeschlossen ist. Besagter Zweig geht beispielsweise zwischen dem Sperr-/Überströmventil 23 und dem Druckbegrenzer 24 von dem mit dem Wasserstofftank 2 verbundenen Abschnitt der Wasserstoffleitung 17 ab. In diesem Zweig sind zweckmäßig ebenfalls ein Druckbegrenzer 24 und eine Dosiereinheit 25 angeordnet, wobei letztere so ausgestaltet ist, dass sie die von der Brennstoffzelle 29 jeweils benötigte Wasserstoffmenge zumessen bzw. absperren kann, damit die Brennstoffzelle 29 die jeweils benötigte elektrische Energie bereitstellen kann. Desweiteren weist die Brennstoffzelle 29 einen Kathodengaseingang 32 auf, an den eine Kathodengaszuführeinrichtung 33 angeschlossen ist. Diese umfasst eine Kathodengasleitung 34, die an den Kathodengaseingang 32 angeschlossen ist, sowie eine Fördereinrichtung 35, z.B. eine Pumpe oder ein Gebläse. Die Brennstoffzelle 29 enthält eine Anodenseite 36 und eine Kathodenseite 37, die insbesondere durch einen Elektrolyten 38 voneinander getrennt sind. Im Betrieb der Brennstoffzelle 29 wird Wasserstoff umgesetzt bzw. verstromt, so dass an wenigstens einem Stromanschluss 39 elektrischer Strom 40 an der Brennstoffzelle 29 abgreifbar ist. Der Elektromotor 30 ist nun elektrisch an die Brennstoffzelle 29 angeschlossen, also mit dem elektrischen Anschluss 39 verbunden.

Die Brennstoffzelle 29 kann z.B. als Hochtemperatur-Brennstoffzelle, insbesondere als Festkörper-Brennstoffzelle (sogenannte "SOFC"-Brennstoffzelle) ausgestaltet sein. Die Arbeitstemperatur einer derartigen Hochtemperatur-Brennstoffzelle liegt im Maximum bei etwa 850° C. Alternativ kann die Brennstoffzelle 29 auch als Niedertemperatur-Brennstoffzelle ausgestaltet sein. Beispielsweise handelt es sich hierbei um eine Brennstoffzelle 29, die mit einer Protonenaustauschmembran bzw. mit einer polymeren Elektrolytmembran arbeitet, sogenannte "PEM"-Brennstoffzelle. Die Arbeitstemperatur einer derartigen Niedertemperatur-Brennstoffzelle liegt im Maximum bei etwa 80° bis 150° C. Bei einer Niedertemperatur-Brennstoffzelle, insbesondere bei einer PEM-Brennstoffzelle, ist es üblich, das Kathodengas 15 mit einem relativ hohen Anteil an Wasserdampf zu versehen. Das Wasser unterstützt den Brennstoffzellenprozess am Elektrolyt 38. Dementsprechend kann gemäß Fig. 2 die Wasserstoffheizung 1 optional mit einer Einspeiseinrichtung 68 ausgestattet sein, mit deren Hilfe Wasserdampf in das Kathodengas 15 einbringbar ist. Die Einspeiseinrichtung 68 ist hierzu beispielsweise stromauf des Kathodengaseingangs 32 in der Kathodengasleitung 34 angeordnet. Für den Verbrennungsprozess im Brenner 3 ist ein hoher Wasseranteil im Gemisch unerwünscht. Dementsprechend kann optional eine Entnahmeeinrichtung 69 vorgesehen sein. Mit Hilfe der Entnahmeeinrichtung 69 kann dem Kathodenabgas 46 Wasserdampf entzogen werden. Vorzugsweise ist die Entnahmeeinrichtung 69 hierzu in einer Kathodenabgasleitung 70 angeordnet, die den Kathodenabgasausgang 43 der Brennstoffzelle 29 mit dem Kathodenabgaseingang 47 des Brenners 3 verbindet. Zwischen der Entnahmeeinrichtung 69 und der Einspeiseinrichtung 68 kann eine Wirkverbindung 71 bestehen, die hier durch eine unterbrochene Linie angedeutet ist. Durch diese Wirkverbindung 71 kann der mit Hilfe der Entnahmeeinrichtung 69 dem Kathodenabgas 46 entnommene Wasserdampf der Einspeiseinrichtung 68 zum Einspeisen in das Kathodengas 15 zugeführt werden. Diese Wirkverbindung 71 kann eine Fördereinrichtung für Wasser bzw. Wasserdampf aufweisen. Besonders vorteilhaft ist eine Ausführungsform, bei welcher die Einspeiseinrichtung 68 und die Entnahmeeinrichtung 69 eine bauliche Einheit bilden, so dass die Wirkverbindung 71 im Inneren einer derartigen kombinierten Einspeis- und Entnahmeeinrichtung angeordnet ist. Die Verwendung einer derartigen kombinierten Einspeis- und Entnahmeeinrichtung ist beispielsweise durch einen entsprechenden Verlauf der Kathodenabgasleitung 70 und/oder der Kathodengasleitung 34 realisierbar.

Üblicherweise besteht eine derartige Brennstoffzelle 29 aus einem Stapel einzelner Brennstoffzellenelemente, wobei ein derartiger Stapel ausgangsseitig durch eine Abschlussplatte 41 begrenzt ist. Besagte Abschlussplatte 41 enthält einen Anodenabgasausgang 42 sowie einen Kathodenabgasausgang 42 der Brennstoffzelle 29. Über den Anodenabgasausgang 42 gelangt wasserstoffhaltiges Anodenabgas 44 zu einem Anodenabgaseingang 45 des Brenners 3. Der Anodenabgaseingang 45 kommuniziert dabei mit dem ersten Verteilerpfad 10, so dass der erste Verteilerpfad 10 einen Anodenabgaseingangsbereich des Brenners 3 bildet. Auf entsprechende Weise gelangt Kathodenabgas 46 vom Kathodenabgasausgang 43 über einen Kathodenabgaseingang 47 des Brenners 3 in den zweiten Verteilerpfad 11. Dementsprechend bildet der zweite Verteilerpfad 11 einen Kathodenabgaseingangsbereich des Brenners 3. Bemerkenswert ist nun, dass der Brenner 3 unabhängig von der Brennstoffzelle 29 ebenfalls an den Wasserstofftank 2 angeschlossen ist, wobei der entsprechende Zweig der Wasserstoffleitung 17 über den ersten Eingang 8 ebenfalls an den Anodenabgaseingangsbereich 10 angeschlossen ist. Auf entsprechende Weise ist die Oxidatorzuführeinrichtung 4 über den zweiten Eingang 9 an den Kathodenabgaseingangsbereich 11 des Brenners 3 angeschlossen. Grundsätzlich ist es möglich, die Oxidatorzuführeinrichtung 4 und die Kathodengaszuführeinrichtung 33 baulich miteinander zu kombinieren, sofern für das Oxidatorgas und das Kathodengas das gleiche Gas, insbesondere Luft, verwendet wird.

Die Abgase der Brennstoffzelle 29 enthalten aufgrund der darin unvollständigen Umsetzung nach wie vor Wasserstoff und Sauerstoff und können im Brenner 3 zur Erzeugung von Wärme genutzt werden. Sofern die Wärmeleistung des Brenners 3, die allein durch die Abgase der Brennstoffzelle 29 erzielbar ist, nicht ausreicht, wird dem Brenner 3 direkt aus dem Wasserstofftank 2 Wasserstoffgas 14 und über die Oxidatorzuführeinrichtung 4 direkt Oxidatorgas 15 zugemessen.

Zum Beheizen des Fahrzeuginnenraums 28 ist der Wärmeübertrager 5 der Wasserstoffheizung 1 bei der in Fig. 2 gezeigten Ausführungsform in einen Warmluftkanal 48 des Fahrzeugs eingebunden. Besagter Warmluftkanal 48 ist hier durch den Heizpfad 20 gebildet und bildet einen Bestandteil einer Innenraumheizung des Fahrzeugs. Das vom Brennerabgas 16 aufgeheizte Heizmedium 21 bildet in diesem Fall die dem Fahrzeuginnenraum 28 zugeführte Warmluft. Insoweit kann die Wasserstoffheizung 1 zur direkten Beheizung des Fahrzeuginnenraums 28 genutzt werden. Bei einer anderen Anwendung kann die Wasserstoffheizung 1 z.B. auch in ein sogenanntes Klimamodul als Heizeinrichtung eingebaut werden. Klimamodule oder sogenannte HVAC-Anlagen, wobei "HVAC" für Heater, Ventilation und Air Condition steht, sind kombinierte Systeme zum Beheizen, Belüften, Kühlen oder allgemein zum Klimatisieren von Räumen, insbesondere in Kraftfahrzeugen.

Bei einer besonderen Ausgestaltung der in Fig. 2 gezeigten Ausführungsform kann der Brenner 3 baulich in die Brennstoffzelle 29 integriert werden, derart, dass der Brenner 3 besagte Abschlussplatte 41 ersetzt bzw. die Abschlussplatte 41 bildet. Hierdurch kann eine besonders kompakte Bauform erreicht werden.

Bei der in Fig. 3 gezeigten Ausführungsform umfasst die Antriebseinrichtung 27 einen mit Wasserstoff betreibbaren Verbrennungsmotor 49, der in einen Kühlkreis 50 eingebunden ist. Im Kühlkreis 50 zirkuliert ein Kühlmedium 51. Zum Antrieb des Kühlmediums 51 enthält der Kühlkreis 50 eine Fördereinrichtung 52, z.B. eine Pumpe oder ein Gebläse. Im Kühlkreis 50 kann optional ein Wärmeübertrager 53 angeordnet sein, der üblicherweise als Fahrzeugkühler bezeichnet wird und der im Betrieb des Fahrzeugs mit einer Luftströmung 54 beaufschlagt ist.

Der Verbrennungsmotor 49 ist über einen entsprechenden Zweig der Wasserstoffleitung 17 an den Wasserstofftank 2 angeschlossen. Besagter Zweig geht von dem mit dem Wasserstofftank 2 verbundenen Abschnitt der Wasserstoffleitung 17 am zwischen dem Sperr-/ Überströmventil 23 und dem Druckbegrenzer 24 ab und enthält vorzugsweise ebenfalls einen Druckbegrenzer 24 sowie eine weitere Dosiereinheit 25. Zweckmäßig befindet sich diese Dosiereinheit 25 unmittelbar am Verbrennungsmotor 49, z.B. in Form einer Eindüs- oder Einspritzeinrichtung, die den einzelnen Zylindern des Verbrennungsmotor 49 zugeordnet ist. Der Verbrennungsmotor 49 ist außerdem an eine Frischgasleitung 55 angeschlossen, über die der Verbrennungsmotor 49 ein sauerstoffhaltiges Frischgas, zweckmäßig Luft, erhält. Das Frischgas kann in seiner Konsistenz dem Oxidatorgas entsprechen und wird im folgenden daher ebenfalls mit 15 bezeichnet. Der Verbrennungsmotor 49 erzeugt im Betrieb durch die Verbrennung von Wasserstoffgas mit Frischgas 15 Motorabgas 56, das über eine entsprechende Abgasleitung 57 abgeführt wird.

Grundsätzlich ist es bei dieser Ausführungsform ebenfalls möglich, den Wärmeübertrager 5 der Wasserstoffheizung 1 direkt zur Beheizung des Fahrzeuginnenraums 28 zu verwenden. Ein entsprechender Heizpfad 20 bzw. ein entsprechender Warmluftkanal 48 sind in Fig. 3 durch unterbrochene Linien angedeutet. Alternativ oder auch zusätzlich erfolgt die Beheizung des Fahrzeuginnenraums 28 mit Hilfe eines Warmluftkanals 58, der über einen weiteren Wärmeübertrager 59 mit dem Kühlkreis 50 des Verbrennungsmotors 49 wärmeübertragend gekoppelt ist. Auf diese Weise kann im Betrieb des Kühlkreises 50 das erhitzte Kühlmedium 51 Wärme über besagten Wärmeübertrager 59 in im Warmluftkanal 48 transportierte Luft eingebracht werden, um so Warmluft zu erzeugen, die dann den Fahrzeuginnenraum 28 zugeführt werden kann. Hierzu enthält besagter Warmluftkanal 48 außerdem eine geeignete Fördereinrichtung 60, insbesondere eine Pumpe oder ein Gebläse. Bei dieser Ausführungsform erfolgt die Beheizung des Fahrzeuginnenraums 28 mit Hilfe der Wärme im Kühlkreis 50.

Zweckmäßig ist nun der Wärmeübertrager 5 der Wasserstoffheizung 1 in den Kühlkreis 50 des Verbrennungsmotors 49 eingebunden. Ein Steuerventil 61 steuert dabei die Durchströmung des Wärmeübertragers 5 mit dem Kühlmedium 51, das bei dieser Ausführungsform das Heizmedium des Wärmeübertragers 5, also das mit Hilfe der heißen Brennerabgase 16 beheizbare Heizmedium bildet. Der Wärmeübertrager 5 ist vorzugsweise parallel zum Fahrzeugkühler 53 des Kühlkreises 50 angeordnet und kann bei entsprechender Ansteuerung des Steuerventils 61 einen Bypass zum Fahrzeugkühler 53 bilden. Auf diese Weise kann im Bedarfsfall dem Kühlmedium 51 Wärme zugeführt werden, beispielsweise um den Verbrennungsmotor 49 möglichst rasch auf seine optimale Betriebstemperatur zu bringen und/oder um dem Kühlkreis 50 über den Wärmeübertrager 59 des Warmluftkanals 58 hinreichend Wärme zur Beheizung des Fahrzeuginnenraums 28 entziehen zu können. Die Wasserstoffheizung 1 wird dann zur indirekten Beheizung des Innenraums 28 genutzt.

Alternativ ist es auch hier möglich, die Wasserstoffheizung 1 als Heizeinrichtung in einem Klimamodul bzw. in einer HVAC-Anlage zu verwenden.

Bei einer besonders kompakten Ausführungsform der in den Fig. 1 bis 3 gezeigten Wasserstoffheizung 1 kann der Wärmeübertrager 5 baulich in den Brenner 3 integriert sein, und zwar so, dass der Wärmeübertrager 5 den Brennraum 7 ausgangsseitig begrenzt. Somit treten die heißen Brennerabgase 16 unmittelbar durch den Wärmeübertrager 5 aus dem Brenner 3 aus.

Bei der Wasserstoffheizung 1 kann der Brenner 3 unter anderem auch dazu verwendet werden, überschüssigen Wasserstoff 14 kontrolliert zu verbrennen, um eine Schadstoffbelastung der Umgebung zu vermeiden. Dies ist insbesondere dann von Vorteil, wenn ein Wasserstofftank 2 verwendet wird, bei dem der Wasserstoff in flüssigem Zustand bei tiefen Temperaturen bereitgestellt wird. Trotz bester Isolierungsmaßnahmen strebt der flüssige Wasserstoff stets einen Temperaturausgleich mit der Umgebung an, wobei es zu einer Verdampfung eines Teils des Wasserstoffs kommt, die zu einem Druckanstieg im Wasserstofftank 2 führt. Das Überströmventil 23 und der Brenner 3 können über die Steuerung 63 gezielt so betätigt werden, dass bei Erreichen eines vorbestimmten Maximaldrucks für eine kurze Zeit der Brenner 3 betrieben wird, um dieses überschüssige Wasserstoffgas zu entsorgen. Durch Absenkung des Drucks auf einen vorbestimmten Minimaldruck kann ein Regelverhalten mit einer Hysterese erzielt werden, so dass der Brenner 3 nur in vergleichsweise großen Abständen für kurze Zeitspannen betrieben werden muss. Die bei diesem Entspannungsvorgang des Wasserstofftanks 2 generierte Wärme kann z.B. zum Beheizen der Antriebseinrichtung 27 und/oder des Fahrzeuginnenraums 28 verwendet werden.

## Patentansprüche

1. Wasserstoffheizung,
- mit einem Wasserstofftank (2) zum Speichern von Wasserstoff,
- mit einem an den Wasserstofftank (2) angeschlossenen Brenner (3) zum Erzeugen heißer Brennerabgase (16) durch Verbrennen von Wasserstoffgas (14) und einem Sauerstoff enthaltenden Oxidatorgas (15),
- mit einer Oxidatorzuführeinrichtung (4) zur Versorgung des Brenners (3) mit dem Oxidatorgas (15),
- mit einem Wärmeübertrager (5) zur Übertragung von Wärme vom Brennerabgas (16) auf ein Heizmedium (21).

2. Wasserstoffheizung nach Anspruch 1,
**dadurch gekennzeichnet,**
- **dass** die Wasserstoffheizung (1) als Gebäudeheizung zum Beheizen eines Gebäudes ausgestaltet ist,
- **dass** das Gebäude ein Heizsystem (26) aufweist, in dem das Heizmedium (21) strömt,
- **dass** der Wärmeübertrager (5) in das Heizsystem (26) eingebunden ist.

3. Wasserstoffheizung nach Anspruch 1,
**dadurch gekennzeichnet, dass** die Wasserstoffheizung (1) als Standheizung oder als Zuheizer eines Kraftfahrzeugs ausgestaltet ist.

4. Wasserstoffheizung nach Anspruch 3,
**dadurch gekennzeichnet,**
- **dass** das Kraftfahrzeug eine mit Wasserstoff betriebene Antriebseinrichtung (27) aufweist, die an einen im Kraftfahrzeug angeordneten Wasserstofftank (2) angeschlossen ist,
- **dass** der Brenner (3) bei im Fahrzeug angeordneter Wasserstoffheizung (1) an den Wasserstofftank (2) des Fahrzeugs angeschlossen ist.

5. Wasserstoffheizung nach Anspruch 4,
**dadurch gekennzeichnet,**
- **dass** die Antriebseinrichtung (27) eine Brennstoffzelle (29) zum Generieren von elektrischem Strom aus einem wasserstoffhaltigen Anodengas und einem sauerstoffhaltigen Kathodengas sowie einen an die Brennstoffzelle (29) elektrisch angeschlossenen Elektromotor (30) zum Antreiben des Fahrzeugs aufweist,
- **dass** der Brenner (3) eingangsseitig einen mit einem Anodenabgasausgang (42) der Brennstoffzelle (29) verbundenen Anodenabgaseingangsbereich (10) und einen mit einem Kathodenabgasausgang (43) der Brennstoffzelle (29) verbundenen Kathodenabgaseingangsbereich (11) aufweist,
- **dass** der Wasserstofftank (2) an den Anodenabgaseingangsbereich (10) des Brenners (3) angeschlossen ist,
- **dass** die Oxidatorzuführeinrichtung (4) an den Kathodenabgaseingangsbereich (11) des Brenners (3) angeschlossen ist.

6. Wasserstoffbrenner nach Anspruch 5,
**dadurch gekennzeichnet,**
**dass** der Wasserstofftank (2) an einen Anodengaseingang (31) der Brennstoffzelle (29) angeschlossen ist, derart, dass das Wasserstoffgas (14) des Wasserstofftanks (2) das Anodengas der Brennstoffzelle (29) bildet.

7. Wasserstoffheizung nach Anspruch 4,
**dadurch gekennzeichnet,**
- **dass** die Antriebseinrichtung (27) einen mit Wasserstoff betreibbaren Verbrennungsmotor (49) aufweist,
- **dass** der Verbrennungsmotor (49) in einen Kühlkreis (50) eingebunden ist, in dem ein Kühlmedium (51) zirkuliert.

8. Wasserstoffheizung nach einem der Ansprüche 5 bis 7,
**dadurch gekennzeichnet,**
**dass** der Wärmeübertrager (5) der Wasserstoffheizung (1) in einen Warmluftkanal (48) einer Innenraumheizung des Fahrzeugs eingebunden ist, derart, dass im Betrieb der Wasserstoffheizung (1) das vom Brennerabgas (16) erwärmte Heizmedium (21) die dem Fahrzeuginnenraum (28) zugeführte Warmluft bildet.

9. Wasserstoffheizung nach Anspruch 7,
**dadurch gekennzeichnet, dass** der Wärmeübertrager (5) der Wasserstoffheizung (1) in den Kühlkreis (50) des Verbrennungsmotors (49) eingebunden ist, derart, dass das Kühlmedium (51) des Kühlkreises (50) das Heizmedium (21) bildet.

10. Wasserstoffheizung nach Anspruch 9,
**dadurch gekennzeichnet, dass** in den Kühlkreis (50) ein weiterer Wärmeübertrager (59) eingebunden ist, der außerdem in einen Warmluftkanal (58) einer Innenraumheizung des Fahrzeugs eingebunden ist, derart, dass im Betrieb des Kühlkreises (50) die dem Fahrzeuginnenraum (28) zugeführte Warmluft durch das Kühlmedium (51) erwärmbar ist.

11. Wasserstoffheizung nach einem der Ansprüche 1 bis 10,
**dadurch gekennzeichnet,**
- **dass** der Brenner (3) einen Brennraum (7) enthält, in dem die Verbrennung von Wasserstoffgas (14) und Oxidatorgas (15) stattfindet,
- **dass** der Wärmeübertrager (5) der Wasserstoffheizung (1) an den Brenner (3) angebaut ist, derart, dass der Wärmeübertrager (5) den Brennraum (7) ausgangsseitig begrenzt.

12. Wasserstoffheizung nach einem der Ansprüche 1 bis 11,
**dadurch gekennzeichnet,**
**dass** eine Steuerung (63) zum Betreiben des Brenners (3) vorgesehen ist, die so ausgestaltet ist, dass damit vom Wasserstofftank (2) abzuführendes Wasserstoffgas (14) automatisch mit Oxidatorgas (15) verbrennbar ist.
